# FASCICULE DE BREVET EUROPEEN

(11) **EP 2 945 734 B1**
(45) Date de publication et mention de la délivrance du brevet: **30.11.2016**
(21) Numéro de dépôt: 14700930.2
(22) Date de dépôt: 20.01.2014
(51) Int. Cl.: B01J 19/18, B01J 3/00, B01J 3/02, A62D 3/38

(54) **DISPOSITIF ET PROCÉDÉ D'OXYDATION HYDROTHERMALE POUR LE TRAITEMENT D'UNE MATIERE DANS UN MILIEU SUPERCRITIQUE**
VORRICHTUNG UND VERFAHREN FÜR HYDROTHERMALE OXIDATION ZUR BEHANDLUNG EINES MATERIALS IN EINEM SUPERKRITISCHEN MEDIUM
HYDROTHERMAL OXIDATION DEVICE AND METHOD FOR TREATING A MATERIAL IN A SUPERCRITICAL MEDIUM

(30) Priorité: 18.01.2013 FR 1350427
(43) Date de publication de la demande: 25.11.2015
(73) Titulaire: Commissariat à l'Énergie Atomique et aux Énergies Alternatives, 75015 Paris (FR)
(72) Inventeur: RUIZ, Jean Christophe, F-30290 Laudun l'Ardoise (FR); TURC, Hubert-Alexandre, F-30133 Les Angles (FR); CHARTON, Frédéric, F-30200 Bagnols sur Ceze (FR)
(74) Mandataire: Brevalex
(86) Numéro de dépôt international: PCT/EP2014/051049
(87) Numéro de publication internationale: WO 2014/111581

(56) Documents cités:
- WO-A1-02/30836
- DE-A1- 10 120 581
- FR-A1- 2 891 161
- US-A- 5 500 120
- US-A- 5 552 039

## Description

La présente invention concerne un dispositif d'oxydation hydrothermale pour le traitement d'une matière dans un milieu supercritique. Elle concerne également un procédé de traitement d'une matière par oxydation hydrothermale.

Plus précisément, la présente invention concerne un dispositif et un procédé de traitement en continu d'une matière par oxydation hydrothermale, ledit dispositif comprenant :
- un corps principal muni à une première de ses extrémités d'une bride d'interface froide, de moyens d'étanchéité entre le corps principal et la bride, le corps principal, la bride et les moyens d'étanchéité étant réalisés dans des matériaux résistant aux pressions et aux températures des milieux supercritiques,
- un tube interne placé à l'intérieur du corps principal de manière à former une zone annulaire le long du corps principal, le tube interne comprenant une première extrémité froide et une deuxième extrémité chaude, la première extrémité du tube interne étant fixée de manière étanche à la bride d'interface froide, le tube interne délimitant une zone intérieure réactionnelle,
- un moyen d'agitation placé dans la zone intérieure réactionnelle du tube interne et actionné au moyen d'un arbre tournant,
- un moyen de réfrigération pour refroidir la matière traitée se trouvant dans la zone intérieure réactionnelle du tube interne avant son évacuation du dispositif d'oxydation par une sortie de matière traitée,
- une entrée pour un mélange eau et oxydant située du côté de la première extrémité froide du corps principal, le mélange eau et oxydant parcourant la zone annulaire de la première extrémité froide à la deuxième extrémité chaude du tube interne avant de pénétrer dans la zone intérieure réactionnelle du tube interne,
- une sortie des effluents située au niveau de la première extrémité froide du corps principal,
- une entrée de matière à traiter, située à une deuxième extrémité chaude du corps principal, cette entrée débouchant dans le tube interne à sa deuxième extrémité.

On connaît déjà (WO 02/30836) un dispositif d'oxydation hydrothermale de ce type. Ce document concerne un procédé et un autoclave pour l'oxydation en eau supercritique de matière organique. Cet autoclave continu à double enveloppe agitée a été largement utilisé pour diverses applications OHT en laboratoire. Des déchets organiques d'origines diverses ont été détruits avec succès sans occasionner de problèmes de bouchage ou de corrosion. Toutefois, dans le cas de déchets à fort pouvoir calorifique inférieur (PCI) la maîtrise de la température de réaction repose en partie sur la dilution du milieu réactionnel avec le procédé, impactant le volume d'effluents aqueux généré. Par ailleurs, dans le cas de déchets à faible PCI, les rendements de destruction sont élevés, proches de 99%, mais inférieurs à ceux observés pour les déchets à fort PCI (rendement de destruction de 99,9%). La relative faiblesse des rendements de destruction observés pour les déchets à faible PCI provient à la fois de l'absence d'effets thermiques significatifs liés à la réaction et à un préchauffage insuffisant.

1 FR 2891161 A1 décrit un réacteur et un procédé pour le traitement en eau sous pression d'une matière dans un milieu réactionnel fluide, comprenant un corps délimitant une zone réactionnelle, une entrée de la matière à traiter dans la zone réactionnelle, un point d'introduction d'un oxydant dans la zone réactionnelle, au moins une sortie de la matière traitée hors de la zone réactionnelle, la matière à traiter suivant un trajet défini dans la zone réactionnelle entre son entrée et sa sortie, caractérisé en ce que le point d'introduction de l'oxydant dans la zone réactionnelle est situé en aval de l'entrée de la matière et est espacé de cette dernière d'une certaine distance de manière à définir une zone d'anoxie comprise entre l'entrée de la matière à traiter et le point d'introduction de l'oxydant, zone dans laquelle le milieu fluide est en anoxie.

DE 10120581 A1 décrit un procédé et un dispositif de conversion d'un matériau organique par oxydation en eau supercritique.

La présente invention a pour objet de fournir un dispositif et un procédé permettant le contrôle thermique de l'oxydation hydrothermale de matières organiques. Selon une variante avantageuse, ce dispositif permet en outre la gestion de manière mécanique des solides induits par la réaction d'OHT.

Selon la principale caractéristique de l'invention, le dispositif d'oxydation selon la revendication 1 comporte une entrée pour un effluent dilué, située dans la bride d'interface froide et raccordée à un serpentin de préchauffe disposé le long de la paroi interne du corps principal et s'étendant de sa première extrémité froide à sa deuxième extrémité chaude, le serpentin de préchauffe débouchant dans la zone réactionnelle du tube interne au niveau de cette deuxième extrémité chaude.

Selon une caractéristique préférée, le dispositif d'oxydation hydrothermale de l'invention comporte un échangeur de chaleur formant un radiateur de boucle chaude disposé dans la zone annulaire et dans une zone périphérique située du côté de la deuxième extrémité chaude du tube interne, le radiateur de boucle chaude prélevant de la chaleur de la réaction d'oxydation hydrothermale se produisant dans la deuxième extrémité de la zone interne du tube interne.

De préférence, le dispositif d'oxydation hydrothermale comporte une antichambre réactionnelle, située du côté de la deuxième extrémité chaude du tube interne, l'antichambre réactionnelle étant formée par une paroi interne et par une paroi externe obturant le tube interne, un passage de communication pour le mélange d'eau et d'oxydant étant formé dans chacune des parois interne et externe.

De préférence encore, le dispositif d'oxydation hydrothermale comporte un moyen de chauffage électrique disposé dans le corps principal et débouchant dans l'espace annulaire à proximité de l'antichambre réactionnelle, ce moyen de chauffage étant protégé par cette disposition des agressions chimiques induites par le déchet ou la réaction d'oxydation hydrothermale.

Avantageusement, le dispositif d'oxydation hydrothermale de l'invention comporte un échangeur de chaleur formant un radiateur de boucle froide permettant d'abaisser la température du milieu fluide après réaction et avant sa sortie du réacteur de façon à garantir les conditions de tenue des organes d'étanchéité du corps principal sur les brides et à solubiliser au mieux les espèces minérales ayant précipités.

Avantageusement encore, le dispositif d'oxydation hydrothermale de l'invention comporte un module de gestion des solides, ce module se présentant sous la forme d'un couvercle qui obture un orifice traversant formé dans la bride, des moyens d'étanchéité froids étant prévus entre le module de gestion des solides et la bride. De préférence, le module de traitement des solides est entraîné en rotation par un entraînement magnétique. Le module de traitement des solides présente, en coupe axiale, une forme circulaire. Il est ajusté avec un jeu eₘₐₓ dans un diamètre correspondant du module de gestion des solides, le mobile de traitement des solides permettant un traitement mécanique des solides présents dans l'effluent refroidi issu de la réaction hydrothermale et permettant de mettre ces solides au gabarit à une granulométrie choisie pour ne pas colmater les tuyauteries et les équipements situés en aval du module de gestion des solides.

Par ailleurs, la présente invention concerne un procédé de traitement en continu d'une matière par oxydation hydrothermale selon la revendication 8.

Ce procédé comprend les étapes suivantes :
a) introduction dans un réacteur d'un fluide comprenant de l'eau et un oxydant sous une pression supérieure à 22,1 MPa dans une zone annulaire formée entre une paroi interne d'un corps principal de réacteur et un tube interne au corps principal, à une première extrémité froide du corps principal ;
b) chauffage du fluide eau/oxydant dans la zone annulaire à une température supérieure à 374°C ;
c) introduction du fluide eau/oxydant sous pression et chauffé obtenu à l'étape b) dans le tube interne du réacteur au niveau d'une deuxième extrémité chaude du corps principal et une introduction simultanée de la matière à traiter dans le tube interne au niveau de la deuxième extrémité chaude du corps principal ;
d) mélange du fluide eau/oxydant sous pression chauffé et de la matière à traiter dans une première partie du tube interne de manière à oxyder la matière à traiter et refroidissement du mélange fluide/matière oxydée ainsi obtenu dans une deuxième partie du tube interne ;
e) évacuation du mélange fluide/matière oxydée du réacteur à une première extrémité froide du corps principal.

Selon l'invention, ce procédé comporte en outre une étape d'introduction d'un effluent dilué dans un serpentin de préchauffe, l'entrée du serpentin se trouvant au niveau de la première extrémité froide du corps principal, le serpentin étant enroulé le long de la paroi interne du corps principal et débouchant dans la première partie du tube interne.

Selon l'invention, le coeur du procédé d'oxydation hydrothermale continu est destiné à assurer les fonctions suivantes :
- injection de déchets pouvant contenir une forte ou une faible proportion d'eau (fort potentiel calorifique inférieur) en présence d'un oxydant mélangé ou non à l'eau,
- préchauffage des fluides avant la réaction d'OHT par récupération de l'énergie dégagée par la combustion du déchet organique,
- mélange des réactifs (déchets organiques, eau, oxydant) en continu et établissement d'une réaction de combustion en continu sous agitation, la réaction d'OHT étant confinée à distance des parois de l'autoclave sous pression par l'interposition d'une paroi en un matériau choisi pour sa résistance à l'agression induite par la réaction de combustion (corrosion, abrasion) ainsi que par la mise en oeuvre d'une zone assurant le confinement dynamique de la réaction d'OHT dans la zone réactionnelle.

Le procédé d'oxydation hydrothermale est également destiné à assurer les fonctions suivantes :
- récupération de l'excédent de puissance thermique dégagé par la réaction OHT vers un circuit externe qui garantit l'homogénéisation de la température dans la zone réactionnelle et limite la température à laquelle est exposé l'équipement sous pression,
- injection d'une puissance de surchauffe à proximité immédiate de la zone réactionnelle sans exposition de l'équipement de chauffe aux agressions issues de la réaction OHT et permettant la mise en chauffe rapide et le démarrage de la réaction d'OHT à partir de l'équipement froid, ainsi que la surchauffe des fluides eau/oxydant avant mélange et initiation de la réaction OHT dans le cas où les conditions de fonctionnement établies ne permettent pas d'atteindre l'ignition spontanée de la réaction OHT de manière stable, dans le cas de solvants de faible PCI,
- refroidissement en continu des produits de la réaction de combustion avec utilisation complémentaire d'un circuit externe,
- gestion des produits de réaction aux solides présents dans les effluents refroidis par calibrage mécanique et éventuellement par re-solubilisation à froid.

Selon une caractéristique préférée, le procédé comporte une étape supplémentaire selon laquelle on refroidit une zone réactionnelle située à l'intérieur du tube interne au niveau d'une deuxième extrémité de ce tube interne au moyen d'un échangeur de chaleur formant un radiateur de boucle chaude disposé contre le tube interne.

De préférence, on chauffe le fluide eau/oxydant dans l'espace annulaire compris entre la paroi interne du corps principal et la paroi externe du tube interne au moyen d'une ou de plusieurs résistances électriques situées à proximité immédiate de la zone réactionnelle, du radiateur de boucle chaude et de la chaleur produite par la réaction hydrothermale.

Avantageusement, on extrait de la chaleur du tube interne à proximité de sa première extrémité au moyen d'un échangeur de chaleur formant un radiateur de boucle froide, cet échangeur permettant d'abaisser la température du milieu fluide après la réaction hydrothermale et avant sa sortie du réacteur.

Selon une caractéristique préférée, on traite mécaniquement les solides présents dans l'effluent refroidi en les broyant entre une paroi interne d'un module de gestion des solides raccordé à une bride du réacteur et une paroi externe d'un mobile de traitement des solides de manière à obtenir une granulométrie choisie suffisamment fine pour ne pas colmater les tuyauteries et les équipements situés en aval du module de gestion des solides.

Le procédé de l'invention permet également une maintenance aisée des équipements internes du corps principal du réacteur par l'intermédiaire d'une bride de l'autoclave maintenue froide en condition de fonctionnement. La température de fonctionnement de cette bride permet l'utilisation de moyens d'étanchéité simples et robustes, par exemple des joints en Viton^{®}.

D'autres caractéristiques et avantages de la présente invention apparaîtront à la lecture de la description qui suit d'un exemple de réalisation donné à titre illustratif en référence aux figures annexées. Sur ces figures :
- la figure 1 est une vue générale en coupe longitudinale d'un dispositif d'oxydation hydrothermale conforme à la présente invention ;
- la figure 2 est une vue en coupe de détail d'un module de gestion des solides faisant partie d'un dispositif d'oxydation hydrothermale conforme à la présente invention.

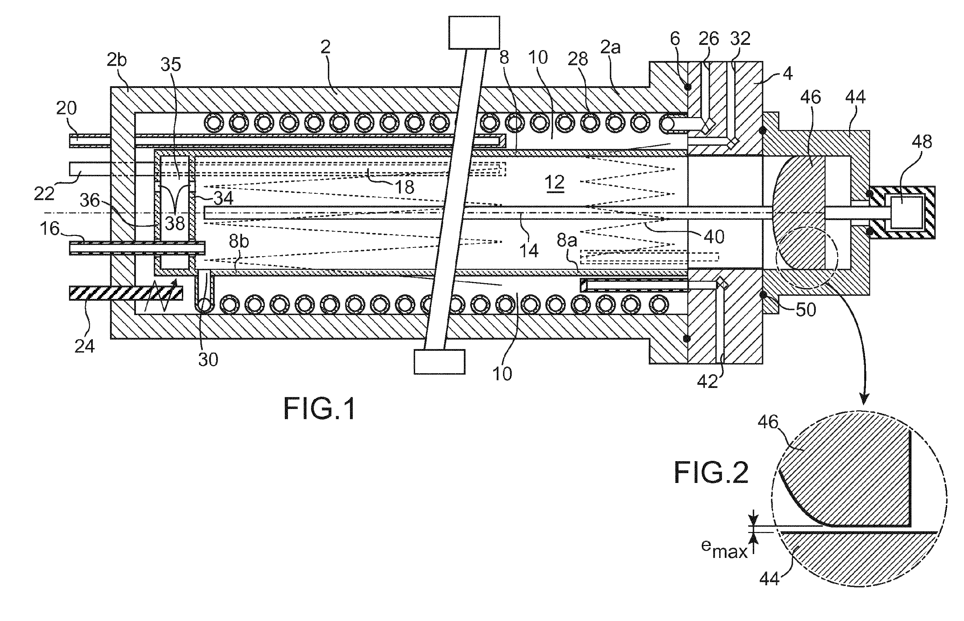

On a représenté sur la figure 1 une vue générale en coupe d'un dispositif d'oxydation hydrothermale conforme à la présente invention. Ce dispositif comporte un corps principal 2 comportant une première extrémité froide 2a et une deuxième extrémité chaude 2b. Le corps principal est borgne à sa deuxième extrémité 2b. A sa première extrémité 2a il comporte une bride 4. La bride 4 est raccordée à la première extrémité 2a du corps principal 2. Des moyens d'étanchéité 6 sont prévus entre la bride 4 et le corps principal 2. Le corps principal 2 et la bride 4 sont réalisés dans des matériaux résistant aux pressions et aux températures des milieux supercritiques. La température de fonctionnement de la bride 4 permet l'utilisation de moyens d'étanchéité simples et robustes (Viton^{®}). Le corps 2 est calorifugé sur sa surface extérieure (non représenté). Il est placé de préférence de manière horizontale.

Un tube interne 8 est placé à l'intérieur du corps principal 2. Le tube interne 8 délimite une zone annulaire 10 le long du corps principal 2. Le tube interne 8 comporte une première extrémité froide 8a et une deuxième extrémité chaude 8b. La première extrémité 8a du tube interne 8 est fixée de manière étanche à la bride 4. Le tube interne 8 délimite une zone intérieure 12. Le tube interne 8 est réalisé dans un matériau adapté pour sa résistance chimique aux agressions induites par la réaction OHT. Il peut être pourvu, en fonction de l'encombrement disponible et des échanges thermiques requis, d'ailettes soudées ou de chicanes sur sa surface externe sur tout ou partie de sa longueur (non représentées). Ces ailettes et/ou ces chicanes participent à l'amélioration du transfert thermique en jouant sur l'hydrodynamique d'écoulement dans la zone annulaire, ainsi qu'à l'augmentation de la surface d'échange thermique entre le milieu réactionnel et l'espace annulaire 10 par création d'une surface d'échange secondaire.

Un moyen d'agitation est placé dans la zone intérieure 12 du tube interne 8. Ce moyen d'agitation est actionné au moyen d'un arbre tournant 14. La zone intérieure du tube interne 8 définit une zone réactionnelle.

A l'extrémité borgne (deuxième extrémité chaude 2b) du corps principal 2 est monté un tube d'injection 16. Le tube d'injection 16 constitue un point d'injection d'effluent permettant l'introduction, via le tube d'injection 16, de matières organiques dans la zone réactionnelle 12. Un échangeur de chaleur 18 comportant une entrée 20 et une sortie 22 est situé à la périphérie du tube interne 8. Un fluide caloporteur circule à l'intérieur de l'échangeur 18. Le fluide caloporteur est fourni et traité par un circuit externe raccordé à l'entrée 20 et à la sortie 22 du fluide caloporteur. L'échangeur 18 est situé à la périphérie immédiate du tube interne 8. Il a pour fonction d'évacuer les calories de la zone réactionnelle 12. L'échangeur 18 est protégé des agressions de la réaction OHT par le tube interne 8. L'insertion de cet échangeur dans le corps principal 2 implique la résistance des parois à une contrainte mécanique en compression imposée par la pression opératoire. L'échangeur 18 est de préférence réalisé en un matériau bon conducteur de la chaleur.

A sa deuxième extrémité 2b, le corps principal est pourvu d'un moyen de chauffage électrique. Ce moyen de chauffage est constitué par une ou plusieurs cartouches de chauffe 24 traversant la paroi de fond du corps principal 2 et plongeant dans le mélange eau/oxydant. Le moyen de chauffage 24 se situe dans la zone annulaire 10 comprise entre le tube interne 8 et la paroi intérieure du corps principal 2. Les moyens de chauffage 24 sont situés à proximité immédiate de la zone réactionnelle 12 de manière à surchauffer le mélange eau/oxydant de sorte que des conditions de température favorables à l'ignition de la réaction OHT dans le tube interne 12 soient atteintes.

A sa première extrémité 2a, le corps principal 2 comporte la bride d'interface froide 4. Cette bride est pourvue d'un point d'injection d'effluent 26 dilué dans une forte proportion d'eau. Le point d'injection 26 est constitué d'un canal radial perforé dans la bride d'interface froide 4 et d'un canal axial et raccordé à un échangeur en spirale 28 accolé à la paroi interne du corps principal 2. L'échangeur 28 débouche en tête du tube interne 8 (référence 30). La bride d'interface 4 est également pourvue d'un point d'injection de mélange eau/oxydant 32 alimentant la zone annulaire 10.

Le tube interne 8 est alimenté par le serpentin de préchauffe 28 contenant l'effluent dilué issu de l'injection 26.

D'autre part, le tube interne 8 comporte une antichambre réactionnelle située du côté de la deuxième extrémité chaude 8b du tube interne 8. L'antichambre réactionnelle est formée par une paroi interne 34 et par une paroi externe 36 obturant la deuxième extrémité 8b du tube interne. Un passage 38 pour le mélange d'eau et d'oxydant est formé dans chacune des parois internes 34 et externes 36.

Le tube interne 8, et plus précisément le volume réactionnel 12, est alimenté par le mélange eau/oxydant après qu'il ait parcouru la zone annulaire 10 jusqu'à la communication avec l'antichambre réactionnelle 35. Le tube interne 8 est encore alimenté par l'injection de déchets à fort pouvoir calorifique inférieur (PCI) injecté via le tube d'injection 16 qui débouche directement dans le volume réactionnel 12.

Du côté de la première extrémité du tube interne 8, on trouve encore un échangeur froid 40 situé à la périphérie du tube interne 8. Un fluide caloporteur circule dans l'échangeur 40. Ce fluide caloporteur est fourni et traité par un circuit extérieur raccordé aux lignes d'entrée 42 et de sortie (non représentées) du fluide caloporteur. L'échangeur froid 40 est protégé des agressions de la réaction OHT par le tube interne 8. L'insertion de cet échangeur dans le corps principal implique la résistance des parois à une contrainte mécanique en compression imposée par la pression opératoire. L'échangeur est de préférence réalisé en un matériau bon conducteur de la chaleur.

Dans un mode préféré de réalisation de l'invention, l'extrémité 8a du tube interne comporte un échangeur froid supplémentaire situé en aval de l'échangeur froid 40 et venant compléter ce dernier. Cet échangeur froid supplémentaire est installé à l'intérieur du tube interne 8 juste en amont de la bride froide 4. Un fluide caloporteur circule dans l'échangeur supplémentaire. Le fluide caloporteur est fourni et traité par un circuit extérieur raccordé à l'entrée et à la sortie de l'échangeur. Cet échangeur froid supplémentaire, bien qu'il se trouve en contact avec le milieu réactionnel 12, est protégé du risque de corrosion par l'abaissement de température réalisé par le premier échangeur 40. L'insertion de cet échangeur dans l'autoclave implique la résistance des parois à une contrainte mécanique en compression imposée par la pression opératoire.

Selon une variante de réalisation, cet échangeur froid peut être inséré dans la bride d'interface froide 4.

Le moyen d'agitation permet le brassage du fluide dans la zone réactionnelle 12 depuis le point d'injection des effluents à fort pouvoir calorifique inférieur 16 et l'antichambre réactionnelle 35 jusqu'au droit de la bride d'interface froide 4. Un module de traitement des solides 44 est fixé sur la bride froide 4. Le module de traitement des solides 44 comporte un mobile de traitement des solides 46 dimensionné de manière à constituer avec la paroi du module 44 un passage d'épaisseur maximal eₘₐₓ (voir figure 2). Le mobile de traitement des solides 46 est entraîné en rotation par un entraînement magnétique 48. Il présente, en coupe axiale, une forme circulaire et il est ajusté avec un jeu eₘₐₓ dans un diamètre correspondant du module de gestion des solides. Le mobile de traitement des solides 46 permet un traitement des solides présents dans l'effluent refroidi issu de la réaction hydrothermale. Il permet de mettre ces solides au gabarit à une granulométrie suffisamment faible pour ne pas colmater les tuyauteries et les équipements situés en aval du module de gestion des solides 44.

L'invention permet de réaliser entre l'extrémité 2a du corps principal 2 et la bride 4 d'une part, et entre la bride 4 et le module de gestion des solides 44, une étanchéité simple et efficace correspondant à une pression opératoire sur un fluide et des matériaux maintenus froids au moyen des échangeurs froids 40 et de l'échangeur supplémentaire, éventuellement. Cette étanchéité peut être réalisée avec des joints simples et robustes (joints 6 entre l'extrémité 2a du corps principal et la bride froide 4 et 50 entre la bride froide 4 et le module de gestion des solides 44). L'invention permet également de définir une géométrie permettant une inspection de l'état des équipements internes au corps principal 2 et une maintenance aisée par démontage du module de gestion des solides 44 pour accéder à l'axe 14 du moyen d'agitation et aux mobiles d'agitation (non représentés) et de traitement des solides 46. Le démontage de la bride 4 permet d'accéder à la paroi externe du tube interne 8, aux échangeurs de chaleur chaud 18 et froid 40, ainsi qu'au serpentin de préchauffe 28 et à la paroi interne du corps principal 2.

On explique ci-après le fonctionnement en régime permanent du dispositif d'oxydation hydrothermale représenté sur les figures 1 et 2. Ce fonctionnement est décrit en régime permanent suivant les conditions suivantes :
- réacteur à la pression opératoire,
- alimentation (flux stable) en matière organique en continu. En fonction des besoins les entrées 26 et/ou 16 sont utilisées,
- alimentation en continu (flux stable) en eau et en oxydant,
- équilibre thermique résultant du dégagement de chaleur de la réaction d'OHT, des échanges thermiques (échangeurs chaud et froid 18, 40) et des températures des fluides d'alimentation.

Les mobiles d'agitation des moyens d'agitation 14 et de traitement des solides 46 tournent de façon continue à une vitesse imposée par le moteur extérieur 48 via un entraînement magnétique. Le mélange situé dans le volume réactionnel est ainsi maintenu agité en respectant au mieux un écoulement piston par tranche, équivalent à une succession de réacteurs continus parfaitement agités.

Les conditions hydrothermales en eau supercritique permettent le démarrage de la réaction de combustion OHT dès le mélange entre le déchet issu de l'entrée de l'effluent dilué 26 et/ou du tube d'injection 16 avec l'eau et l'oxydant issus de l'entrée 32. La réaction de combustion, une fois initiée, libère une puissance thermique transmise dans le fluide du volume réactionnel 12. Le transfert de chaleur à la paroi du tube interne 8 est facilité par la turbulence produite par le moyen d'agitation 14. Ce flux de chaleur est ensuite transmis au fluide dans lequel baigne le tube interne 12, à savoir le mélange eau/oxydant qui circule dans la zone annulaire 10 à contre-courant du sens du fluide dans le volume réactionnel 12. La paroi du tube interne 8 constitue ainsi un échangeur de chaleur à contre-courant et le mélange eau/oxydant est chauffé par la puissance dégagée par la réaction OHT.

Au droit de la zone réactionnelle, l'échangeur chaud 18 formant une boucle chaude est parcouru par un fluide caloporteur. En l'absence de circulation du fluide caloporteur, le régime thermique établi, du fait de la cinétique rapide de la réaction OHT, conduit dans un premier temps à une forte élévation de température dans le volume réactionnel 12 et dans un second temps à une diminution de la température à mesure que l'échange à contre-courant avec le mélange eau/oxydant s'établit. Ce profil de température peut conduire à atteindre des valeurs hautes de températures telles que les matériaux du tube interne 8, voire la paroi du corps principal 2 soit dégradés ou bien conduisent à des phénomènes de pyrolyse avec une production de graphite non souhaitée dans les effluents. Ce profil de température peut également conduire à diminuer rapidement l'étendue du volume réactionnel, et donc le déroulement efficace de la réaction OHT.

La circulation du fluide caloporteur dans l'échangeur 18, via la circulation du mélange eau/oxydant dans la zone annulaire 10 a pour conséquences d'extraire de la puissance au droit de la tête du tube interne 8 (zone 8b), de restituer de la puissance au droit de la zone réactionnelle 12 en aval de l'amorce de la réaction OHT, de limiter le transfert de chaleur entre le tube interne 8 et le corps principal 2 en interposant une surface avec une température imposée, d'extraire de la puissance produite par la réaction OHT et non restituée aux fluides préchauffés hors du corps principal 2.

Cette circulation permet de contrôler la température des équipements et du volume réactionnel afin de piloter la cinétique réactionnelle en limitant la formation de pyrolyse dans le tube d'injection par exemple ou bien en étendant la zone de température opératoire afin d'utiliser au mieux le volume sous pression (augmentation du temps de séjour). Cette circulation permet également de maintenir les équipements et les matériaux qui les constituent dans un domaine de température acceptable en offrant un degré de liberté vis-à-vis du pilotage de l'installation. Par exemple, cela permet de découpler la zone du corps principal 2 concernée par rapport au débit d'alimentation en eau, en oxydant et en déchets, aux échanges de chaleur entre les fluides préchauffés dans la zone annulaire 10 et dans le serpentin de préchauffe 28, et par rapport également à la puissance de la réaction de combustion OHT.

La température et le débit de la circulation du fluide caloporteur dans l'échangeur chaud 18 peuvent être asservis à la température maximale acceptée au niveau de la paroi interne du corps principal 2 et de la paroi externe du tube interne 8 prise dans la zone annulaire 10 au droit de la zone où se déroule un dégagement de puissance. La température et le débit de circulation du fluide caloporteur peuvent également être asservis à la température minimale située au niveau de la paroi externe du tube interne 8 et au droit de la zone de transition de température entre la zone chaude et la zone froide du corps principal 2.

L'efficacité de cette régulation est également contrôlée par la turbulence et la surface d'échange disponible dans la zone annulaire 10.

L'échange thermique qui vient d'être décrit peut conduire à imposer au mélange eau/oxydant circulant dans la zone annulaire 10 d'une part et au déchet dilué circulant dans le serpentin de préchauffe 28 d'autre part, d'être maintenus à une température relativement éloignée de la température d'ignition de la réaction d'OHT. Cette limitation de la température peut être imposée afin de contrôler le transfert thermique avec l'échangeur chaud 18, de contrôler la cinétique réactionnelle lors du mélange des réactifs en tête du volume réactionnel dans le tube interne 8, et de limiter l'échauffement dans le volume réactionnel.

Dans ce cas, le mélange réactionnel, même en présence d'un déchet à fort PCI injecté dans le tube d'injection 16, n'induit pas d'ignition efficace de la réaction d'OHT. Pour permettre de surchauffer le mélange de sorte que les conditions de température favorables à l'ignition de la réaction d'OHT soient atteintes, une résistance électrique 24 plongeant dans le mélange eau/oxydant est introduite dans la zone annulaire 10 à proximité immédiate de l'introduction du mélange dans la zone réactionnelle 12.

La puissance injectée par la résistance électrique 24 peut être asservie, par exemple, mais de manière non limitative, à la température du mélange eau/oxydant prise au niveau de l'antichambre réactionnelle 35 en tête (8b) du tube interne 8. On notera que la ou les résistances électriques 24 peuvent être utilisées lors de la phase de démarrage du procédé pour parvenir à une ignition rapide de la réaction d'OHT.

En aval de la zone où a lieu la réaction d'OHT, l'échangeur froid 40, formant la boucle froide, est parcouru par un fluide caloporteur. En l'absence de circulation de ce fluide caloporteur, le refroidissement des effluents se situe dans la limite des capacités d'échange avec la circulation à contre-courant des réactifs froids entrant que sont le mélange eau/oxydant issu de l'entrée 32 et le déchet issu de l'entrée 26. Ce profil de températures peut conduire à atteindre un niveau de température trop important en sortie du corps principal 2 pour garantir la tenue des organes d'étanchéité 6 et 50 du corps principal sur la bride 4 et du module de gestion des solides 44 sur la bride 4. Notamment, on préconisera de limiter la température de ces organes d'étanchéité à des valeurs moyennes inférieures à 150°C et en crête inférieures à 250°C. Ce profil de température peut également conduire à atteindre un niveau de température trop important pour garantir la tenue des matériaux en aval de la zone réactionnelle, laquelle est construite avec un matériau résistant aux espèces chimiques libérées lors de la libération d'OHT à des températures supérieures aux conditions mesurées et aux conditions modérées requises en sortie de corps principal. Notamment, certains acides minéraux libérés par la réaction d'OHT contenant des hétéroatomes (chlore, soufre, phosphore) pourraient corroder les surfaces du corps principal et des tuyauteries en aval à une température supérieure à une centaine de degrés.

La circulation du fluide caloporteur dans l'échangeur froid 40 a pour conséquence d'extraire très efficacement la chaleur résiduelle non extraite par la circulation à contre-courant des réactifs froids que sont le mélange eau/oxydant issu de l'entrée 32 et le déchet dilué issu de l'entrée 26. Cette circulation permet de diminuer la température des effluents avant d'atteindre la bride froide 4. La température et le débit de cette circulation peuvent donc être asservis, par exemple mais de manière non limitative, à la température des effluents prise par un thermocouple plongeant dans le fluide au droit de la bride d'interface froide 4. L'efficacité de cette régulation est également contrôlée par la turbulence du milieu réactionnel par l'agitation des moyens d'agitation 14 et la surface d'échange disponible dans la zone annulaire 10.

On décrira à présent le module de gestion des solides 44.

Des éléments minéraux issus du déchet initial peuvent être présents sous forme soluble dans la phase aqueuse en contact avec le déchet, sous forme insoluble en suspension dans le déchet ou la phase aqueuse, ou encore sous forme organique dans le déchet et libérés sous forme de sels ou de sels d'acide lors de la réaction d'OHT. Les matériaux exposés à la réaction d'OHT peuvent également, en fonction des conditions opératoires et de la composition des déchets (présence d'hétéroatomes), être corrodés et libérer dans le fluide du procédé des éléments minéraux constitutifs. Les conditions hydrothermales recherchées lors du traitement des composés organiques permettent d'obtenir une réaction OHT très rapide et extrêmement efficace dont le rendement est supérieur à 99,9%. Ces conditions conduisent cependant, du fait de la diminution importante de la constante diélectrique de l'eau, à précipiter les éléments minéraux contenus dans le déchet et/ou dans l'eau.

La présence de solides dans l'effluent en aval de l'autoclave pose des difficultés de gestion. En effet, la pression du procédé est régulée par la purge en continu des effluents. La présence de solides de tailles indéfinies dans l'effluent en sortie de l'autoclave peut conduire au colmatage des tuyauteries dans le temps, en particulier en cas de restrictions de diamètre. Elle peut également conduire à la dégradation des vannes de régulation de pression en aval de l'autoclave par accumulation, rayures et abrasion des restrictions assurant la fonction de régulation. De manière classique, les organes de régulation de pression sont protégés par l'interposition d'un filtre à seuil de coupure adapté aux préconisations du fabricant. L'inconvénient de cette stratégie est qu'elle induit la gestion d'un flux secondaire de particules (lors d'un décolmatage automatique par exemple) à partir d'une source sous haute pression qui pose dans certaines applications de sérieuses difficultés de mise en oeuvre.

En aval de la bride d'interface froide 4 est implanté un module de gestion des solides 44. Ce module est monté sur l'axe des moyens d'agitation 14 et mis en rotation par le moteur magnétique 48. Le mobile de traitement des solides 46 permet, du fait de sa rotation, de réaliser une action mécanique sur les solides en suspension dans le fluide issu du volume réactionnel et refroidi. Par cette action mécanique (abrasion, cisaillement) la solubilisation de certains minéraux peut être facilitée. Le module assure principalement la mise au calibre des particules avant leur sortie. Le calibrage est assuré par le jeu de rotation entre le mobile de traitement des solides 46 et la surface de la paroi interne du module de gestion des solides 44. Le jeu mécanique eₘₐₓ (voir figure 2) peut être adapté au besoin, et notamment aux contraintes des équipements placés en aval du réacteur.

## Revendications

1. Dispositif d'oxydation hydrothermale pour le traitement d'une matière dans un milieu supercritique, comprenant :
- un corps principal (2) muni à une première (2a) de ses extrémités d'une bride d'interface froide (4), de moyens d'étanchéité (6) entre le corps principal et la bride, le corps principal, la bride et les moyens d'étanchéité étant réalisés dans des matériaux résistants aux pressions et aux températures des milieux supercritiques ;
- un tube interne (8) placé à l'intérieur du corps principal (2) de manière à former une zone annulaire (10) le long du corps principal, le tube interne comprenant une première extrémité froide (8a) et une deuxième extrémité chaude (8b), la première extrémité du tube interne étant fixée de manière étanche à la bride d'interface froide (4), le tube interne (8) délimitant une zone intérieure réactionnelle (12) ;
- un moyen d'agitation (14) placé dans la zone intérieure réactionnelle (12) du tube interne (8) et actionné au moyen d'un arbre tournant ;
- un moyen de réfrigération (18) pour refroidir la matière traitée se trouvant dans la zone intérieure réactionnelle (12) du tube interne (8) avant son évacuation du dispositif d'oxydation par une sortie de matière traitée ;
- une entrée (32) pour un mélange eau et oxydant située du côté de la première extrémité froide (2a) du corps principal, le mélange eau et oxydant parcourant la zone annulaire (10) de la première extrémité froide (8a) à la deuxième extrémité chaude (8b) du tube interne (8), avant de pénétrer dans la zone intérieure réactionnelle (12) du tube interne (8) ;
- une sortie des effluents située au niveau de la première extrémité froide (2a) du corps principal (2) ;
- une entrée (16) de matière à traiter, située à une deuxième extrémité chaude (2b) du corps principal (2), cette entrée débouchant dans le tube interne (8), à sa deuxième extrémité (8b) ;
**caractérisé en ce que** le dispositif d'oxydation comporte en outre une entrée (26) pour un effluent dilué, située dans la bride d'interface froide (4) et raccordée à un serpentin de préchauffe (28) disposé le long de la paroi interne du corps principal (2) et s'étendant de sa première extrémité froide (2a) à sa deuxième extrémité chaude (2b), le serpentin de préchauffe (28) débouchant (30) dans la zone réactionnelle du tube interne (8) au niveau de sa deuxième extrémité chaude (8b).

2. Dispositif d'oxydation hydrothermale selon la revendication 1, **caractérisé en ce qu'**il comporte un échangeur de chaleur (18) formant un radiateur de boucle chaude disposé dans la zone annulaire (10) et dans une zone périphérique située du côté de la deuxième extrémité chaude (8b) du tube interne (8), le radiateur de boucle chaude (18) prélevant de la chaleur de la réaction d'oxydation hydrothermale se produisant dans la deuxième extrémité de la zone interne (12) du tube interne (8).

3. Dispositif d'oxydation hydrothermale selon la revendication 1 ou 2, **caractérisé en ce qu'**il comporte une antichambre réactionnelle (35), située du côté de la deuxième extrémité chaude (8b) du tube interne (8), l'antichambre réactionnelle (35) étant formée par une paroi interne (34) et par une paroi externe (36) obturant le tube interne (8), un passage de communication (38) pour le mélange d'eau et d'oxydant étant formé dans chacune des parois interne et externe.

4. Dispositif d'oxydation hydrothermale selon la revendication 3, **caractérisé en ce qu'**il comporte un moyen de chauffage électrique (24) disposé dans le corps principal (2) et débouchant dans l'espace annulaire (10), à proximité de l'antichambre réactionnelle (35), ce moyen de chauffage étant protégé par cette disposition des agressions chimiques induites par le déchet ou la réaction d'oxydation hydrothermale.

5. Dispositif d'oxydation hydrothermale selon l'une quelconque des revendications 1 à 4, **caractérisé en ce qu'**il comporte un échangeur de chaleur (40) formant un radiateur de boucle froide permettant d'abaisser la température du milieu fluide après réaction de façon à garantir les conditions de tenue des organes d'étanchéité (6, 50) du corps principal sur les brides et à solubiliser au mieux les espèces minérales ayant précipitées.

6. Dispositif d'oxydation hydrothermale selon l'une quelconque des revendications 1 à 5, **caractérisé en ce qu'**il comporte un module de gestion des solides (44), ce module se présentant sous la forme d'un couvercle qui obture un orifice traversant formé dans la bride, des moyens d'étanchéité froids (50) étant prévus entre le module de gestion des solides (44) et la bride (4).

7. Dispositif d'oxydation hydrothermale selon la revendication 6, **caractérisé en ce qu'**il comporte un mobile de traitement des solides (46) entrainé en rotation par un entrainement magnétique (48), le mobile de traitement des solides (46) présentant, en coupe axiale, une forme circulaire et étant ajusté avec un jeu e max dans un diamètre correspondant du module de gestion des solides (44), le mobile de traitement des solides permettant un traitement mécanique des solides présents dans l'effluent refroidi issu de la réaction hydrothermale et permettant de mettre ces solides au gabarit à une granulométrie choisie pour ne pas colmater les tuyauteries et les équipements situés en aval du module de gestion des solides (44).

8. Procédé de traitement en continu d'une matière par oxydation hydrothermale, comprenant les étapes suivantes :
a) introduction dans un réacteur d'un fluide comprenant de l'eau et un oxydant sous une pression supérieure à 22,1 MPa dans une zone annulaire (10) formée entre une paroi interne d'un corps principal de réacteur (2) et un tube (8) interne au corps principal, à une première extrémité froide du corps principal (2a) ;
b) chauffage du fluide eau/oxydant dans la zone annulaire (10) à une température supérieure à 374 °C ;
c) introduction du fluide eau/oxydant sous pression et chauffé obtenu à l'étape b) dans le tube interne (8) du réacteur au niveau d'une deuxième extrémité chaude (2b) du corps principal, et une introduction simultanée (16) de la matière à traiter dans le tube interne (8) au niveau de la deuxième extrémité chaude (2b) du corps principal ;
d) mélange du fluide eau/oxydant sous pression chauffé et de la matière à traiter dans une première partie du tube interne (8) de manière à oxyder la matière à traiter et refroidissement du mélange fluide/matière oxydée ainsi obtenu dans une deuxième partie du tube interne (8) ;
e)évacuation du mélange fluide/matière oxydée du réacteur à une première extrémité froide du corps principal ;
**caractérisé en ce qu'**il comporte en outre une étape d'introduction d'un effluent dilué dans un serpentin de préchauffe (28), l'entrée (26) du serpentin (28) se trouvant au niveau de la première extrémité froide (2a) du corps principal (2), le serpentin étant enroulé le long de la paroi interne du corps principal (2) et débouchant (30) dans la première partie du tube interne (8).

9. Procédé selon la revendication 8, **caractérisé en ce qu'**il comporte une étape supplémentaire selon laquelle on refroidit une zone réactionnelle (12) située à l'intérieur du tube interne (8) au niveau d'une deuxième extrémité chaude (8b) de ce tube interne (8) au moyen d'un échangeur de chaleur (18) formant un radiateur de boucle chaude disposé contre le tube interne (8).

10. Procédé selon la revendication 8 ou 9, **caractérisé en ce que** l'on chauffe le fluide eau/oxydant dans l'espace annulaire (12) compris entre la paroi interne du corps principal et la paroi externe du tube interne au moyen :
a) d'une ou de plusieurs résistances électriques (24) situées au niveau de l'antichambre réactionnelle ;
b) du radiateur de boucle chaude ;
c) de la chaleur produite par la réaction hydrothermale.

11. Procédé selon l'une quelconque des revendications 8 à 10, **caractérisé en ce que** l'on extrait de la chaleur du tube interne (8) à proximité de sa première extrémité froide au moyen d'un échangeur de chaleur (40) formant un radiateur de boucle froide , cet échangeur permettant d'abaisser la température du milieu fluide après la réaction hydrothermale et avant sa sortie du réacteur.

12. Procédé selon l'une quelconque des revendications 8 à 11, **caractérisé en ce que** l'on traite mécaniquement les solides présents dans l'effluent refroidi en les broyant entre une paroi interne d'un module de gestion des solides (44) raccordé à une bride (4) du réacteur et une paroi externe d'un mobile de traitement des solides (46) de manière à obtenir une granulométrie choisie suffisamment fine pour ne pas colmater les tuyauteries et les équipements situés en aval du module de gestion des solides (44).

## Patentansprüche

1. Vorrichtung für hydrothermale Oxidation zur Behandlung eines Materials in einem überkritischen Medium, enthaltend:
- ein Hauptgehäuse (2), das an einem ersten (2a) seiner Enden mit einem kalten Schnittstellenflansch (4) und mit Dichtungsmitteln (6) zwischen dem Hauptgehäuse und dem Flansch versehen ist, wobei das Hauptgehäuse, der Flansch und die Dichtungsmittel aus Materialien hergestellt sind, die den Druck- und Temperaturwerten überkritischer Medien standhalten;
- ein Innenrohr (8), das innerhalb des Hauptgehäuses (2) so positioniert ist, dass ein ringförmiger Bereich (10) entlang des Hauptgehäuses gebildet wird, wobei das Innenrohr ein kälteres erstes Ende (8a) und ein wärmeres zweites Ende (8b) aufweist, wobei das erste Ende des Innenrohrs in dichter Weise an den kalten Schnittstellenflansch (4) befestigt ist und das Innenrohr (8) einen inneren Reaktionsbereich (12) eingrenzt;
- eine Rühreinrichtung (14), die in dem inneren Reaktionsbereich (12) des Innenrohrs (8) positioniert ist und mittels einer drehbaren Welle betätigt wird,
- eine Kühleinrichtung (18) zum Kühlen des behandelten Materials, das sich in dem inneren Reaktionsbereich (12) des Innenrohrs (8) befindet, bevor es aus der Oxidationsvorrichtung über einen Auslass für behandeltes Material abgeleitet wird;
- einen Einlass (32) für ein Wasser-Oxidans-Gemisch, der auf der Seite des kalten ersten Endes (2) des Hauptgehäuses liegt, wobei das Wasser-Oxidans-Gemisch durch den ringförmigen Bereich (10) vom kälteren ersten Ende (8a) bis zum wärmeren zweiten Ende (8b) des Innenrohrs (8) strömt, bevor es in den inneren Reaktionsbereich (12) des Innenrohrs (8) einströmt;
- einen Auslass für Ablaufmaterial, der im Bereich des kälteren ersten Endes (2a) des Hauptgehäuses (2) liegt;
- einen Einlass (16) für zu behandelndes Material, der an einem wärmeren zweiten Ende (2b) des Hauptgehäuses (2) liegt, wobei dieser Einlass in das Innenrohr (8) an seinem zweiten Ende (8b) mündet;
**dadurch gekennzeichnet, dass** die Oxidationsvorrichtung ferner einen Einlass (26) für verdünntes Ablaufmaterial aufweist, der in dem kalten Schnittstellenflansch (4) liegt und an eine Vorheizschlange (28) angeschlossen ist, die entlang der Innenwand des Hauptgehäuses (2) angeordnet ist und sich von seinem kälteren ersten Ende (2a) bis zu seinem wärmeren zweiten Ende (2b) erstreckt, wobei die Vorheizschlage (28) in den Reaktionsbereich des Innenrohrs (8) in Höhe seines wärmeren zweiten Endes (8b) mündet (30).

2. Vorrichtung zur hydrothermalen Oxidation nach Anspruch 1, **dadurch gekennzeichnet, dass** sie einen Wärmetauscher (18) enthält, der einen Heißkreisradiator bildet, der in dem ringförmigen Bereich (10) und in einem Umfangsbereich angeordnet ist, der auf der Seite des wärmeren zweiten Endes (8b) des Innenrohrs (8) liegt, wobei der Heißkreisradiator (18) aus der hydrothermalen Oxidationsreaktion Wärme entnimmt, die in dem zweiten Ende des Innenbereichs (12) des Innenrohrs (8) entsteht.

3. Vorrichtung zur hydrothermalen Oxidation nach Anspruch 1 oder 2, **dadurch gekennzeichnet, dass** sie einen Reaktionsvorraum (35) enthält, der auf der Seite des wärmeren zweiten Endes (8b) des Innenrohrs (8) liegt, wobei der Reaktionsvorraum (35) aus einer Innenwand (34) und einer Außenwand (36) gebildet ist, die das Innenrohr (8) verschließen, wobei ein Kommunikationsdurchlass (38) für das Wasser-Oxidans-Gemisch in jeder der Innen- und Außenwand ausgebildet ist.

4. Vorrichtung zur hydrothermalen Oxidation nach Anspruch 3, **dadurch gekennzeichnet, dass** sie eine elektrische Heizeinrichtung (24) aufweist, das in dem Hauptgehäuse (2) angeordnet ist und in den ringförmigen Raum (10) in der Nähe des Reaktionsvorraums (35) mündet, wobei diese Heizeinrichtung aufgrund dieser Anordnung vor chemischen Einwirkungen geschützt ist, die durch den Abgang bzw. die hydrothermale Oxidationsreaktion hervorgerufen werden.

5. Vorrichtung zur hydrothermalen Oxidation nach einem der Ansprüche 1 bis 4, **dadurch gekennzeichnet, dass** sie einen Wärmetauscher (40) enthält, der einen Kaltkreisradiator bildet, mit dem die Temperatur des fließfähigen Mediums nach Reaktion gesenkt werden kann, so dass Standhaltungseigenschaften der Dichtungsmittel (6, 50) des Hauptgehäuses an den Flanschen sichergestellt werden und ausgefällte Mineralien bestmöglich löslich gemacht werden.

6. Vorrichtung zur hydrothermalen Oxidation nach einem der Ansprüche 1 bis 5, **dadurch gekennzeichnet, dass** sie ein Feststoffabführmodul (44) aufweist, wobei dieses Modul in Form einer Abdeckung vorliegt, die eine durchgehende Öffnung verschließt, welche in dem Flansch ausgebildet ist, wobei zwischen dem Feststoffabführmodul (44) und dem Flansch (4) kalte Dichtungsmittel (50) vorgesehen sind.

7. Vorrichtung zur hydrothermalen Oxidation nach Anspruch 6, **dadurch gekennzeichnet, dass** sie einen Feststoffbehandlungsschieber (46) enthält, der über einen magnetischen Antrieb (48) angetrieben wird, wobei der Feststoffbehandlungsschieber (46) im Axialschnitt eine kreisrunde Form hat und mit einem Spiel e max im Durchmesser angepasst ist, der dem Feststoffabführmodul (44) entspricht, wobei der Feststoffbehandlungsschieber eine mechanische Behandlung der Feststoffe gestattet, die in dem aus der hydrothermalen Reaktion stammenden, abgekühlten Ablaufmaterial vorhanden sind, und gestattet, diese Feststoffe auf eine gewählte Korngrößenverteilung abzugleichen, um nicht die Rohrleitungen und Ausstattungen zu verstopfen, die dem Feststoffabführmodul (44) nachgelagert sind.

8. Verfahren zum kontinuierlichen Behandlung eines Materials durch hydrothermale Oxidation, umfassend die nachfolgenden Schritte:
a) Einführen eines Mediums, das Wasser und ein Oxidans enthält, in einen Reaktor unter einem Druck von über 22,1 MPa in einen ringförmigen Bereich (10), der zwischen einer Innenwand eines Reaktorhauptgehäuses (2) und einem innerhalb des Hauptgehäuses liegenden Rohrs (8) ausgebildet ist, zu einem kälteren ersten Ende des Hauptgehäuses (2a);
b) Erhitzen des Wasser-Oxidans-Mediums in dem ringförmigen Bereich (10) auf eine Temperatur von über 374 °C;
c) Einführen des in Schritt b) erhaltenen, erhitzten Wasser-Oxidans-Mediums unter Druck in das Innenrohr (8) des Reaktors im Bereich eines wärmeren zweiten Endes (2b) des Hauptgehäuses und gleichzeitiges Einführen (16) des zu behandelnden Materials in das Innenrohr (8) im Bereich des wärmeren zweiten Endes (2b) des Hauptgehäuses;
d) Vermischen des erhitzten Wasser-Oxidans-Mediums unter Druck und des zu behandelnden Materials in einem ersten Abschnitt des Innenrohrs (8), so dass das zu behandelnde Material oxidiert, und Abkühlen des so erhaltenen Gemischs aus Medium/oxidiertem Material in einem zweiten Abschnitt des Innenrohrs (8);
e) Ableiten des Gemischs aus Medium/oxidiertem Material aus dem Reaktor in ein kälteres erstes Ende des Hauptgehäuses;
**dadurch gekennzeichnet, dass**
es ferner einen Schritt des Einführens eines verdünnten Ablaufmaterials in eine Vorheizschlange (28) umfasst, wobei der Einlass (26) der Schlange (28) im Bereich des kälteren ersten Endes (2a) des Hauptgehäuses (2) liegt, wobei die Schlange entlang der Innenwand des Hauptgehäuses (2) aufgerollt ist und in den ersten Abschnitt des Innenrohrs (8) mündet (30).

9. Verfahren nach Anspruch 8, **dadurch gekennzeichnet, dass** es einen zusätzlichen Schritt umfasst, bei dem ein Reaktionsbereich (12), der innerhalb des Innenrohrs (8) im Bereich eines wärmeren zweiten Endes (8b) dieses Innenrohrs (8) liegt, mittels eines Wärmetauschers (18) abgekühlt wird, der einen Heißkreisradiator bildet, der an dem Innenrohr (8) angeordnet ist.

10. Verfahren nach Anspruch 8 oder 9, **dadurch gekennzeichnet, dass** das Wasser-Oxidans-Medium in dem ringförmigen Bereich (12) erhitzt wird, der zwischen der Innenwand des Hauptgehäuses und der Außenwand des Innenrohrs liegt, und zwar mittels:
a) eines oder mehrerer elektrischer Widerstände (24), die im Bereich des Reaktionsvorraums liegen;
b) des Heißkreisradiators;
c) der Wärme, die durch die hydrothermale Reaktion entsteht.

11. Verfahren nach einem der Ansprüche 8 bis 10, **dadurch gekennzeichnet, dass** dem Innenrohr (8) in der Nähe seines kälteren ersten Endes mittels eines Wärmetauschers (40) Wärme entzogen wird, der einen Kaltkreisradiator bildet, wobei dieser Wärmetauscher gestattet, die Temperatur des fließfähigen Mediums nach der hydrothermalen Reaktion und vor dessen Austreten aus dem Reaktor zu senken.

12. Verfahren nach einem der Ansprüche 8 bis 11, **dadurch gekennzeichnet, dass** die in dem abgekühlten Ablaufmaterial vorhandenen Feststoffe mechanisch behandelt werden, indem sie zwischen einer Innenwand eines Feststoffabführmoduls (44), das mit einem Flansch (4) des Reaktors verbunden ist, und einer Außenwand eines Feststoffbehandlungsschiebers (46) zerkleinert werden, so dass eine gewünschte Korngrößenverteilung erhalten wird, die ausreichend fein ist, damit nicht die Rohrleitungen und Ausstattungen verstopft werden, die dem Feststoffabführmodul (44) nachgelagert sind.

## Claims

1. Hydrothermal oxidation device for treatment of a material in a supercritical medium, comprising:
- a main body (2) provided with a cold interface flange (4) at a first (2a) of its ends, sealing means (6) between the main body and the flange, the main body, the flange and the sealing means being made from materials resistant to pressures and temperatures in supercritical media;
- an internal tube (8) placed inside the main body (2) so as to form an annular zone (10) along the main body, the internal tube comprising a cold first end (8a) and a hot second end (8b), the first end of the internal tube being fixed in a sealed manner to the cold interface flange (4), the internal tube (8) delimiting an internal reaction zone (12);
- a stirring means (14) placed in the internal reaction zone (12) of the internal tube (8) and actuated by a rotating shaft;
- a cooling means (18) to cool the treated material located in the internal reaction zone (12) of the internal tube (8) before it is evacuated from the oxidation device through a treated material outlet;
- an inlet (32) for the water and oxidant mix located at the cold first end (2a) of the main body, the water and oxidant mix passing through the annular zone (10) from the cold first end (8a) to the hot second end (8b) of the internal tube (8), before penetrating into the internal reaction zone (12) of the internal tube (8);
- an effluents outlet located at the cold first end (2a) of the main body (2);
- an inlet (16) for material to be treated, located at a hot second end (2b) of the main body (2), this inlet opening up into the internal tube (8), at its second end (8b);
**characterised in that** the oxidation device also comprises an inlet (26) for a diluted effluent, located in the cold interface flange (4) and connected to a preheating coil (28) located along the internal wall of the main body (2) and extending from its cold first end (2a) to its hot second end (2b), the preheating coil (28) opening up (30) into the reaction zone of the internal tube (8) at its hot second end (8b).

2. Hydrothermal oxidation device according to claim 1, **characterised in that** it comprises a heat exchanger (18) forming a hot loop heat sink located in the annular zone (10) and in a peripheral zone located adjacent to the hot second end (8b) of the internal tube (8), the hot loop heat sink (18) drawing off heat from the hydrothermal oxidation reaction that occurs in the second end of the internal zone (12) of the internal tube (8).

3. Hydrothermal oxidation device according to claim 1 or 2, **characterised in that** it comprises a reaction antechamber (35), located on the same side as the hot second end (8b) of the internal tube (8), the reaction antechamber (35) being formed by an internal wall (34) and an external wall (36) closing off the internal tube (8), a communication passage (38) for the mix of water and oxidant being formed in each of the internal and external walls.

4. Hydrothermal oxidation device according to claim 3, **characterised in that** it comprises an electrical heating means (24) located in the main body (2) and opening up in the annular space (10), close to the reaction antechamber (35), this heating means being protected by this arrangement from chemical aggression induced by the waste or the hydrothermal oxidation reaction.

5. Hydrothermal oxidation device according to any one of claims 1 to 4, **characterised in that** it comprises a heat exchanger (40) forming a cold loop heat sink that lowers the temperature of the fluid medium after the reaction so as to guarantee conditions for the resistance of sealing devices (6, 50) of the main body on the flanges and to optimise solubilisation of the precipitated mineral species.

6. Hydrothermal oxidation device according to any one of claims 1 to 5, **characterised in that** it comprises a solids management module (44), this module being in the form of a lid that closes off a through orifice formed in the flange, cold sealing means (50) being provided between the solids management module (44) and the flange (4).

7. Hydrothermal oxidation device according to claim 6, **characterised in that** it comprises a solids treatment rotor (46) driven in rotation by a magnetic drive (48), the solids treatment rotor (46) having a circular shaped axial section and being adjusted to have a clearance eₘₐₓ in a corresponding diameter of the solids management module (44), the solids treatment rotor making it possible to perform a mechanical treatment of solids present in the cooled effluent output from the hydrothermal reaction and bringing these solids to a sufficiently small size grading so that pipes and equipment located downstream from the solids management module (44) are not clogged.

8. Method for continuous treatment of a material by hydrothermal oxidation, comprising the following steps:
a) introduction of a fluid comprising water and an oxidant into a reactor at a pressure of more than 22.1 MPa, in an annular zone (10) formed between an internal wall of a main body of the reactor (2) and an internal tube (8) in the main body, at a cold first end of the main body (2a);
b) heating of the water/oxidant fluid in the annular zone (10) to a temperature of more than 374 °C;
c) introduction of the heated water/oxidant fluid under pressure obtained in step b) into the internal tube (8) of the reactor at a hot second end (2b) of the main body, and simultaneous introduction (16) of the material to be treated into the internal tube (8) at the hot second end (2b) of the main body;
d) mix of the heated water/oxidant fluid under pressure and the material to be treated in a first part of the internal tube (8) so as to oxidise the material to be treated and cooling of the fluid/oxidised material mix thus obtained in a second part of the internal tube (8);
e) evacuation of the fluid/oxidised material mix from the reactor at a cold first end of the main body;
**characterised in that** it also comprises a step in which a diluted effluent is added into a preheating coil (28), the inlet (26) of the coil (28) being located at the cold first end (2a) of the main body (2), the coil being wound along the internal wall of the main body (2) and opening up (30) in the first part of the internal tube (8).

9. Method according to claim 8, **characterised in that** it comprises an additional step in which a reaction zone (12) located inside the internal tube (8) is cooled at a hot second end (8b) of this internal tube (8) by means of a heat exchanger (18) forming a hot loop heat sink arranged in contact with the internal tube (8).

10. Method according to claim 8 or 9, **characterised in that** the water/oxidant fluid in the annular space (12) between the internal wall of the main body and the external wall of the internal tube is heated using:
a) one or several electrical resistances (24) located immediately adjacent to the reaction antechamber;
b) the hot loop heat sink;
c) heat produced by the hydrothermal reaction.

11. Method according to any one of claims 8 to 10, **characterised in that** heat is extracted from the internal tube (8) close to its first cold end by means of a heat exchanger (40) forming a cold loop heat sink, this exchanger lowering the temperature of the fluid medium after the hydrothermal reaction and before it exits from the reactor.

12. Method according to any one of claims 8 to 11, **characterised in that** solids present in the cooled effluent are treated mechanically by grinding them between an internal wall of a solids management module (44) connected to a flange (4) of the reactor and an external wall of a solids treatment rotor (46) so as to obtain a sufficiently fine size grading chosen to not clog up the pipes and the equipment downstream from the solids management module (44).
